# EUROPEAN PATENT SPECIFICATION

(11) **EP 3 590 767 B1**
(45) Date of publication and mention of the grant of the patent: **24.11.2021**
(21) Application number: 18716335.7
(22) Date of filing: 01.03.2018
(51) Int. Cl.: B60R 13/04

(54) **MOUNTING STRUCTURE FOR CONNECTING AUTOMOBILE REAR FIXED WINDOW AND DECORATIVE PANEL, AND AUTOMOBILE**
MONTAGESTRUKTUR ZUR VERBINDUNG EINES HINTEREN STARREN FENSTERS EINES KRAFTFAHRZEUGS UND EINER ZIERPLATTE SOWIE KRAFTFAHRZEUG
STRUCTURE DE MONTAGE POUR RELIER UNE VITRE ARRIÈRE FIXE D'AUTOMOBILE ET UN PANNEAU DÉCORATIF, ET AUTOMOBILE

(30) Priority: 01.03.2017 CN 201710117664
(43) Date of publication of application: 08.01.2020
(73) Proprietor: PSA Automobiles SA, 78300 Poissy (FR)
(72) Inventor: ZHOU, Ying, Shanghai (CN); ZHU, Yi, Shanghai (CN); GU, Jian, Shanghai (CN); ZHANG, Yin, Shanghai (CN)
(86) International application number: PCT/IB2018/051298
(87) International publication number: WO 2018/158714

(56) References cited:
- EP-A1- 1 916 157
- EP-A1- 2 269 873
- WO-A1-2005/102781
- JP-A- S6 296 131

## Description

### TECHNICAL FIELD

The invention relates to the technical field of automobile parts, in particular, to a mounting structure for connecting automobile rear fixed window and decorative panel, and an automobile, specifically a mounting structure for connecting automobile rear fixed window and decorative panel, and an automobile, which has a simple structure and is easy to assemble, and which can effectively improve the sealing between the automobile rear fixed window and decorative panel as well as reduce noise.

### BACKGROUND ART

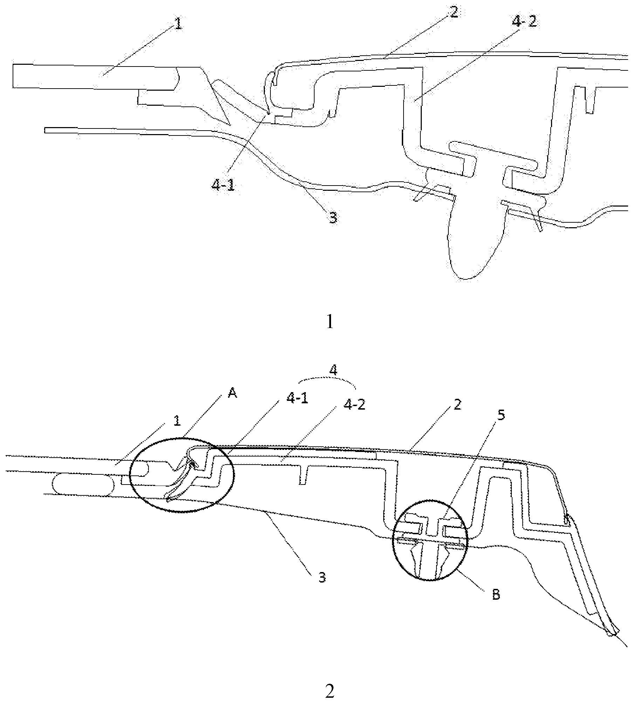

At present, a connecting structure as shown in Figure 1 is adopted in most cases for the sealing connection between the automobile rear fixed window 1 and decorative panel 2. The connecting structure comprises a first connecting part 4-1 and a second connecting part 4-2, with one end of the first connecting part 4-1 attached to the decorative panel 2, and the other end of the first connecting part 4-1 extending toward the upper part of the automobile rear fixed window 1 and fixed at the sealing lip of the automobile rear fixed window 1. After the decorative panel 2 and automobile rear fixed window 1 are completely assembled using the above connecting structure, a force from the decorative panel 2 will act obliquely upward on one end of the first connecting part 4-1, and a force from the sealing lip of the automobile rear fixed window 1 will act obliquely upward upon its other end. After prolonged use, the first connecting part 4-1 will likely to be deformed which provides poor sealing, tends to cause noise and has short service life.

The document EP1916157 disclose a connecting structure to fix a decorative panel to an exterior door panel.

### SUMMARY OF INVENTION

### (1) TECHNICAL PROBLEMS TO BE SOLVED BY THE INVENTION

The objective of the present invention is to provide a mounting structure for connecting the automobile rear fixed window and decorative panel, and an automobile. The mounting structure has a simple structure and easy to assemble, and can effectively improve the sealing effect between the automobile rear fixed window and the decorative panel as well as reduce noise. The invention is intended to solve the problems that exist with the present connecting structure, which is prone to deformation and suffers from poor sealing and noise.

### (2) MEANS FOR SOLVING THE TECHNICAL PROBLEMS

In order to solve the above technical problem, the present invention provides a mounting structure for connecting the automobile rear fixed window and decorative panel. The mounting structure is to be fixed on a car body side panel by a connecting member, and comprises a first connecting part and a second connecting part, which is positioned below the first connecting part and at least partially, overlapped the first connecting part. The first connecting part has an angled part, one end of which has a first extending part which extends away from the car body side panel, and a second extending part which extends from the first extending part to the car body side panel. The first extending part and the angled part form a locking groove for engaging the decorative panel. The second extending part is coupled with the sealing lip of the automobile rear fixed window, and the bottom surface of the second extending part abuts against the outer surface of the car body side panel. The second connecting part extends further from one end of the first connecting part, and is fixed on the car body side panel by the connecting member.

Wherein the locking groove is a U-shaped groove, and the bent part of the decorative panel protrudes, at least partially, into the U-shaped groove, and the bent part abuts against the first extending part.

Wherein the other end of the angled part has an extended part parallel to the decorative panel, and the second connecting part has a supporting part overlapping the extended part. After the bent part of the decorative panel protrudes into the U-shaped groove, the decorative panel, the extended part and the supporting part will be closely attached to each other.

Wherein the bottom surface of the second extending part is provided with at least one blind hole on the side facing the side panel.

Wherein, there are multiple blind holes, and the multiple blind holes are arranged at linear intervals or at circumferential intervals.

Wherein the connecting member is a buckle. The first end of the buckle has a mounting seat for connecting with the second connecting part, and the second end of the buckle has a plug, and the car body side panel has mounting holes for coupling with the plug.

Wherein the buckle further includes a sealing ring mounted to the bottom surface of the mounting seat. The sealing ring will cleave tightly to the outer surface of the car body side panel after the plug is inserted into the mounting hole.

Wherein, the first connecting part and the second connecting part are integrally formed by a double injection molding method.

The present invention also provides an automobile comprising the mounting structure for connecting automobile rear fixed window and decorative panel.

### (3) EFFECTS OF THE INVENTION

The above technical solution of the present invention has the following advantages: the present invention provides a mounting structure for connecting automobile rear fixed window and decorative panel. The mounting structure is fixed on a car body side panel by a connecting member, and comprises a first connecting part and a second connecting part which is fixed below the first connecting part and at least partially, overlapped the first connecting part. The first connecting part has an angled part (and one end of the angled part has a first extending part which extends away from the car body side panel) and a second extending part, which extends from the first extending part to the car body side panel. The first extending part and the angled part form a locking groove for engaging the decorative panel. Installation is simple, with good fixing effect. The second extending part is coupled with the sealing lip of the automobile rear fixed window, and the bottom surface of the second extending part abuts against the outer surface of the car body side panel. Thus, the external load exerted by the automobile rear fixed window on the second extending part will cause the second extending part to attach even closer to the outer surface of the car body side panel, effectively improving the sealing performance, facilitating sound insulation and noise reduction, and enhancing the driving experience. The end of the second connecting part away from the first connecting part is fixed on the car body side panel by the connecting member. It is simple in structure and easy to assemble. With strong practicability, it is conducive to standardization for the purpose of production and marketing.

### BRIEF DESCRIPTION OF THE DRAWINGS

Figure 1 is a schematic diagram showing the connection of the automobile rear fixed window, decorative panel and car body side panel of the prior art;
Figure 2 is a schematic diagram showing the mounting structure for connecting automobile rear fixed window and decorative panel according to the present invention, and the connection of the automobile rear fixed window, decorative panel and car body side panel of the automobile embodiment;
Figure 3 is a partially enlarged schematic diagram of area A of Figure 1 ;
Figure 4 is a partially enlarged schematic diagram of area B of Figure 1 ;
Figure 5 is a schematic diagram showing the mounting structure for connecting automobile rear fixed window and decorative panel according to the present invention, and the method of coupling the sealing lip and decorative panel of the automobile rear fixed window of the automobile embodiment;
Figure 6 is a schematic diagram showing the mounting structure for connecting automobile rear fixed window and decorative panel according to the present invention, and the process of assembling the automobile rear fixed window, decorative panel and car body side panel of the automobile embodiment.

In the figures: 1 : Automobile rear fixed window; 1-1: Sealing lip; 2: Decorative panel; 3: Car body side panel; 4: Injection molded connecting structure; 4-1: First connecting part; 4-1- 1: First extending part; 4-1-2: Second extending part; 4-1-3: Angled part; 4-2: Second connecting part; 4-2-1: Mounting hole; 5: Buckle; 5-1: Mounting seat; 5-2 Plug; 5-3: Sealing ring.

### DETAILED DESCRIPTION OF THE PREFERRED EMBODIMENTS

In order to further clarify the objectives, technical solutions and advantages of the embodiments of the present invention, the technical solutions in the embodiments of the present invention are clearly and completely described in the following sections with reference to the drawings attached in the embodiments of the present invention. It is obvious that the described embodiments are part of the embodiments of the invention, and are not all the embodiments. Based on the embodiments of the present invention, all other embodiments obtained without creative work by those with ordinary skills in the field are within the scope of the present invention.

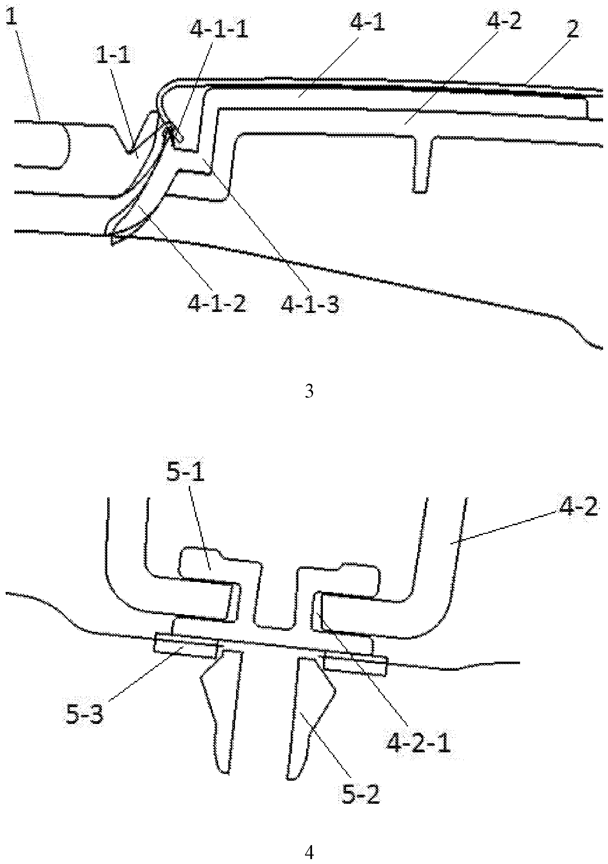

As shown in Figure 2 to Figure 5 , an embodiment of the present invention provides a mounting structure for connecting automobile rear fixed window and decorative panel. The mounting structure is fixed on a car body side panel 3 by a connecting member, and comprises a first connecting part 4-1 and a second connecting part 4-2, which is positioned below the first connecting part 4-1, and which overlaps, at least partially, with the first connecting part 4-1. The partially overlap of the first connecting part 4-1 and the second connecting part 4-2 can improve the structural strength and extend the service life of the mounting structure for connecting automobile rear fixed window 1 and decorative panel 2. The first connecting part 4-1 has an angled part 4-1-3, one end of which is provided with a first extending part 4-1-1 which extends away from car body side panel 3, and a second extending part 4-1-2, which extends from the first extending part 4-1-1 to the car body side panel 3. The first extending part 4-1-1 and the angled part 4-1-3 form a locking groove for engaging the decorative panel 2. Installation is simple, with good fixing effect. The second extending part 4-1-2 is coupled with the sealing lip 1-1 of the automobile rear fixed window 1, and the bottom surface of the second extending part 4-1-2 abuts against the outer surface of car body side panel 3. Thus, the external load exerted by the automobile rear fixed window on the second extending part 4-1-2 will cause the second extending part 4-1-2 to attach even closer to the outer surface of car body side panel 3, effectively improving sealing performance, facilitating sound insulation and noise reduction, and enhancing driving experience. The end of the second connecting part 4-2 away from the first connecting part 4-1 is fixed on the car body side panel 3 by the connecting member. Therefore the structure is simple and easy to assemble. With strong practicability, it is conducive to standardization for the purpose of production and marketing.

In particular, in the present embodiment, when the sealing lip 1-1 of the automobile rear fixed window 1 is coupled with the second extending part 4-1-2 of the first connecting part 4-1, the decorative panel 2 will exert a pressing force upon the sealing lip 1-1 of the automobile rear fixed window 1, causing it to couple even closer with the second extending part 4-1-2, which on the one hand, with good sealing properties; on the other hand, it is kept lower than the surface of the decorative panel 2, and it prevents the generation of noise from the wind load during driving, and enhances the driving experience.

Specifically, the locking groove is a U-shaped groove, and the bent part of the decorative panel 2 protrudes, at least partially, into the U-shaped groove, and the bent part abuts against the first extending part 4-1-1 to improve the fixing effect. In the present embodiment, the angled part 4-1-3 of the first connecting part 4-1 and the first extending part 4-1-1 form a U-shaped groove for accommodating the bent part of the decorative panel 2. The bent part of the decorative panel 2 extends into the U-shaped groove, and keeps the first extending part 4-1-1 below the decorative panel 2 to prevent the generation of noise by the wind load when the automobile is moving, further improving driving experience.

In order to further improve the fixing effect between the decorative panel 2 and the first connecting part 4-1, the other end of the angled part 4-1-3 is provide with an extended part parallel to the decorative panel 2, and the second connecting part 4-2 has a supporting part which overlaps with the extended part. When the bent part of the decorative panel 2 protrudes into the U-shaped groove, the decorative panel 2, the extended part and the supporting part will be in close contact with each other. In this embodiment, the overlapping portion of the second connecting part 4-2 and the first connecting part 4-1 is from the angled part 4-1-3 to the extended part. The supporting part of the second connecting part 4-2 is longer than the extended part of the first connecting part 4-1. After the decorative panel 2 and the first connecting part 4-1 are fully connected, the decorative panel 2, the extended part and the supporting part are in close contact with each other to prevent any gap between the decorative panel 2 and the first connecting part 4-1, so as to prevent the generation of noise.

Further, at least one blind hole is provided at the bottom surface of the second extending part 4-1-2 at the side facing car body side panel 3. In this embodiment, the upper surface of the second extending part 4-1-2 is used for coupling with the sealing lip 1-1 of the automobile rear fixed window 1, and the bottom surface of the second extending part 4-1-2 abuts against the outer surface of car body side panel 3 by suction through the blind hole at the bottom surface of the second extending part 4-1-2, thereby effectively improving the connection strength of the first connecting part 4-1 with car body side panel 3.

Preferably, there are multiple blind holes, and the multiple blind holes are arranged at linear intervals or at circumferential intervals. The number and size of the blind holes are reasonably selected according to the size of the second extending part 4-1-2, and the arrangement of the multiple blind holes can be correspondingly selected based on actual implementation conditions. These specific implementation conditions relate to manufacturing processing costs and the attachment force required etc.

Specifically, the connecting member is a buckle 5, and the first end of the buckle 5 has a mounting seat 5-1 for connecting with the second connecting part 4-2, and the second end of the buckle 5 has a plug 5-2. Car body side panel 3 has a mounting hole 4-2-1 for inserting the plug 5-2 for connection. In the present embodiment, the mounting seat 5-1 is a circular disc with an annular U-shaped groove. During the assembling process, the plug 5-2 of the buckle 5 is inserted into the mounting hole 4-2-1 provided on car body side panel 3. At this time, the periphery of the mounting hole 4-2-1 extends into the annular groove of the mounting seat 5-1, so that the second connecting part 4-2 is fixedly mounted on car body side panel 3. The structure is simple, the installation is easy and the assembly efficiency is effectively improved.

The buckle 5 further includes a sealing ring 5-3 fixed to the bottom surface of the mounting seat 5-1. After the plug 5-2 is protruded into the mounting hole 4-2-1, the sealing ring 5-3 fits the outer surface of car body side panel 3 closely. On the one hand, the sealing performance of the second connecting part 4-2 and car body side panel 3 is improved by providing the sealing ring 5-3; on the other hand, it serves a buffering function during installation to prevent the buckle 5 from causing damage to car body side panel 3.

Preferably, the first connecting part 4-1 and the second connecting part 4-2 are integrally formed by a double injection molding method. In the embodiment, the first connecting part 4-1 and the second connecting part 4-2 are integrally formed by double injection molding to obtain an injection-molded connecting structure 4 for connecting the automobile rear fixed window 1 and the decorative panel 2, thereby reducing processing, and effectively improving production efficiency. It also helps to reduce production cost, with improved cost efficiency.

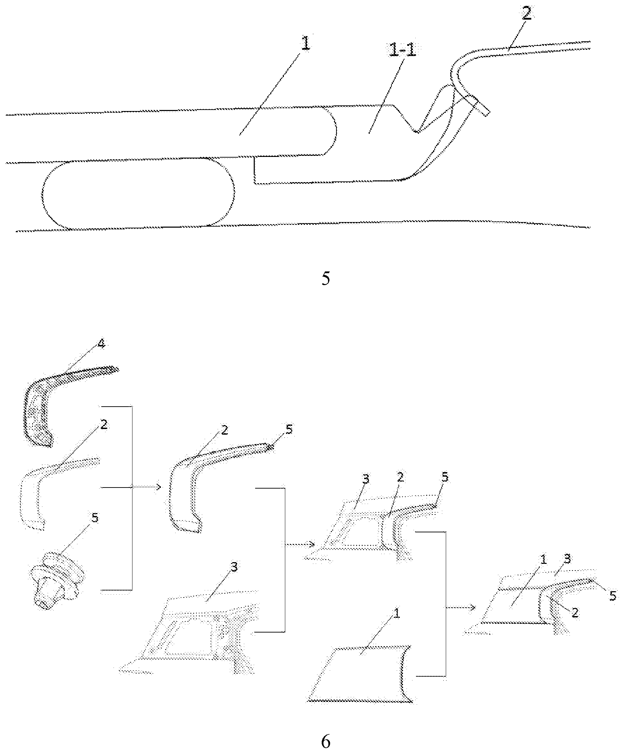

The specific assembly is as shown in Figure 6 . In step 1, the connection of the injection-molded connecting structure 4 and the decorative panel is completed, and the buckle 5 is mounted on the second connecting part 4-2 of the injection-molded connecting structure 4 in order to obtain the first structure. The injection-molded connection structure 4 is fixed to the decorative panel 2 by a locking groove formed by the angled part 4-1-3 and the first extending part 4-1-1. In step 2, the connection of the first structure with the car body side panel is completed to obtain the second structure, in which the injection-molded connection structure 4 is fixed to car body side panel 3 by the buckle 5. In step 3, the connection of the second structure with the automobile rear fixed window 1 is completed, wherein the injection-molded connection structure 4 is coupled with the sealing lip 1-1 of the automobile rear fixed window 1 through the second extending part 4-1-2, finally realizing the fixed assembly of the rear fixed window 1, the decorative panel 2 and car body side panel 3. It is simple in structure and easy to assemble, with good fixing and strong sealing effect.

The present invention also provides an automobile comprising a mounting structure for connecting automobile rear fixed window 1 and the decorative panel 2. The automobile adopts the mounting structure for connecting automobile rear fixed window 1 and the decorative panel 2 provided by the present application. Through adopting the first connecting part 4-1, which consists of the first extending part 4-1-1 and the second extending part 4-1-2, the automobile rear fixed window 1 is attached closer to the first connecting part 4-1 and the decorative panel 2. The sealing property is good, favorable for sound insulation and noise reduction, and also effectively improves the fixing effect of the decorative panel 2. By using a second connecting part 4-2 with the mounting hole 4-2-1, the second connecting part 4-2 is fixed on the car body side panel 3 through the connecting member. It is simple in structure and easy to assemble, thereby effectively improving the production efficiency of the entire car. Moreover, it is economical.

In summary, the present invention provides a mounting structure for connecting automobile rear fixed window and decorative panel. The mounting structure is fixed on the car body side panel by a connecting member, and it consists of a first connecting part and a second connecting part, which is under the first connecting part, and which overlaps, at least partially, with the first connecting part. The first connecting part has an angled part (and one end of the angled part has a first extending part, which extends away from the car body side panel), and a second extending part, which extends from the first extending part to the car body side panel. The first extending part and the angled part form a locking groove for engaging the decorative panel. Installation is simple, with good fixing effect. The second extending part is coupled with the sealing lip of the automobile rear fixed window, and the bottom surface of the second extending part abuts against the outer surface of the car body side panel. Thus, the external load exerted by the automobile rear fixed window on the second extending part causes the second extending part and the outer surface of the car body side panel to be fitted more closely, thereby effectively improving the sealing performance, and facilitating sound insulation. The structure is simple, and the assembly is easy. With strong practicability, it is conducive to standardization for the purpose of production and marketing.

It should be noted that the above embodiments are only for illustrating the technical solutions of the present invention, and not for limiting them. Although the present invention has been described in detail with reference to the foregoing embodiments, those with ordinary skills in the field should understand that they still can modify the technical solutions described in the foregoing embodiments, within the scope of the subject-matter as defined in the appended claims.

## Claims

1. A mounting structure for connecting automobile rear fixed window (1) and decorative panel (2), which is adapted to be fixed to a car body side panel (3) by a connecting member, the mounting structure comprising
- a first connecting part (4-1) ; and
- a second connecting part (4-2) which is positioned below the first connecting part (4-1) and overlapped, at least partially, with the first connecting part (4-1),
wherein the first connecting part (4-1) has an angled part (4-1-3), one end of which is provided with a first extending part (4-1-1) which extends away from the car body side panel (3) and a second extending part (4-1-2) which extends from the first extending part (4-1-1) to the car body side panel (3), **characterized in that** the first extending part (4-1-1) and the angled part (4-1-3) form a locking groove for engaging the decorative panel (2);
the second extending part (4-1-2) is configured to be coupled with a sealing lip (1-1) of the automobile rear fixed window (1) and a bottom surface of the second extending part (4-1-2) abuts against an outer surface of the car body side panel (3); and
an end of the second connecting part (4-2) away from the first connecting part (4-1) is configured to be fixedly connected to the car body side panel (3) by the connecting member.

2. The mounting structure for connecting automobile rear fixed window (1) and decorative panel (2) according to claim 1, **characterized in that** the locking groove is a U-shaped groove, into which a bent part of the decorative panel (2) will protrude at least partially, and the bent part will abut against the first extending part (4-1-1).

3. The mounting structure for connecting automobile rear fixed window (1) and decorative panel (2) according to claim 2, **characterized in that** the other end of the angled part (4-1-3) has an extended part parallel to the decorative panel (2), and the second connecting part (4-2) has a supporting part that overlaps with the extended part, when the bent part of the decorative panel (2) protrudes into the U-shaped groove, the decorative panel (2), the extended part and the supporting part are in close contact with each other.

4. The mounting structure for connecting automobile rear fixed window (1) and decorative panel (2) according to claim 1, **characterized in that** at least one blind hole is provided at a bottom surface of the second extending part (4-1-2) at the side towards the car body side panel (3).

5. The mounting structure for connecting automobile rear fixed window (1) and decorative panel (2) according to claim 4, **characterized in that** there are multiple blind holes, and the multiple blind holes are arranged at linear intervals or at circumferential intervals.

6. The mounting structure for connecting automobile rear fixed window (1) and decorative panel (2) according to claim 1, **characterized in that** the connecting member is a buckle (5), and a first end of the buckle (5) has a mounting seat (5-1) for connecting with the second connecting part (4-2), and a second end of the buckle (5) has a plug (5-2), and the car body side panel (3) has a mounting hole (4-2-1) for connection with the plug (5-2).

7. The mounting structure for connecting automobile rear fixed window (1) and decorative panel (2) according to claim 6, **characterized in that** the buckle (5) further comprises a sealing ring (5-3) fixed to a bottom surface of the mounting seat (5-1), after the plug (5-2) extends into the mounting hole (4-2-1), the sealing ring (5-3) fits the outer surface of the car body side panel (3) closely.

8. The mounting structure for connecting automobile rear fixed window (1) and decorative panel (2) according to claim 1, **characterized in that** the first connecting part (4-1) and the second connecting part (4-2) are integrally formed by a double injection molding method.

9. A vehicle with a rear fixed window (1) and a decorative panel (2), **characterized in that** the vehicle comprise a mounting structure for connecting automobile rear fixed window (1) and decorative panel (2) according to any one of claims 1 to 8.

## Patentansprüche

1. Befestigungsstruktur zum Verbinden einer festen Heckscheibe (1) eines Kraftfahrzeugs und einer Dekorplatte (2), die mittels eines Verbindungselements an einer Seitenwand (3) einer Fahrzeugkarosserie befestigbar ist, wobei die Befestigungsstruktur umfasst:
- ein erstes Verbindungsteil (4-1); und
- ein zweites Verbindungsteil (4-2), das unterhalb des ersten Verbindungsteils (4-1) angeordnet ist und sich zumindest teilweise mit dem ersten Verbindungsteil (4-1) überlappt,
wobei das erste Verbindungsteil (4-1) einen abgewinkelten Teil (4-1-3) aufweist, dessen eines Ende mit einem ersten sich erstreckenden Teil (4-1-1) versehen ist, der sich von der Karosserieseitenplatte (3) weg erstreckt, und einem zweiten sich erstreckenden Teil (4-1-2), der sich von dem ersten sich erstreckenden Teil (4-1-1) zu der Karosserieseitenplatte (3) erstreckt, **dadurch gekennzeichnet, dass** der erste sich erstreckende Teil (4-1-1) und der abgewinkelte Teil (4-1-3) eine Verriegelungsnut zum Eingriff mit der Dekorplatte (2) bilden;
der zweite ausfahrbare Teil (4-1-2) ist so ausgebildet, dass er mit einer Dichtlippe (1-1) der festen Heckscheibe (1) des Kraftfahrzeugs gekoppelt ist, und eine Bodenfläche des zweiten ausfahrbaren Teils (4-1-2) liegt an einer Außenfläche der Seitenwand (3) der Fahrzeugkarosserie an; und
Ein dem ersten Verbindungsteil (4-1) abgewandtes Ende des zweiten Verbindungsteils (4-2) ist durch das Verbindungsteil fest mit der Karosserieseitenwand (3) verbunden.

2. Befestigungsstruktur zum Verbinden von feststehendem Fenster (1) und Dekorplatte (2) eines Kraftfahrzeugs nach Anspruch 1, **dadurch gekennzeichnet, dass** die Verriegelungsnut eine U-förmige Nut ist, in die ein gebogener Teil der Dekorplatte (2) zumindest teilweise hineinragt und der gebogene Teil gegen den ersten sich erstreckenden Teil (4-1-1) stößt.

3. Befestigungsstruktur zum Verbinden eines hinteren festen Fensters (1) eines Kraftfahrzeugs und einer Dekorplatte (2) nach Anspruch 2, **dadurch gekennzeichnet, dass** das andere Ende des abgewinkelten Teils (4-1-3) einen verlängerten Teil parallel zu der Dekorplatte (2) aufweist und der zweite Verbindungsteil (4-2) einen Stützteil aufweist, der mit dem verlängerten Teil überlappt, wenn der abgewinkelte Teil der Dekorplatte (2) in die U-förmige Nut vorsteht, wobei die Dekorplatte (2), der verlängerte Teil und der Stützteil in engem Kontakt miteinander stehen.

4. Befestigungsstruktur zum Verbinden einer festen Heckscheibe (1) eines Kraftfahrzeugs und einer dekorativen Verkleidung (2) nach Anspruch 1, **dadurch gekennzeichnet, dass** mindestens ein Sackloch an einer Bodenfläche des zweiten sich erstreckenden Teils (4-1-2) an der Seite in Richtung der Karosserieseitenverkleidung (3) vorgesehen ist.

5. Befestigungsstruktur zur Verbindung von festem Fenster (1) und Dekorplatte (2) eines Kraftfahrzeugs nach Anspruch 4, **dadurch gekennzeichnet, dass** mehrere Sacklöcher vorhanden sind und die mehreren Sacklöcher in linearen Abständen oder in Umfangsabständen angeordnet sind.

6. Befestigungsstruktur zum Verbinden einer festen Heckscheibe (1) eines Kraftfahrzeugs und einer dekorativen Verkleidung (2) nach Anspruch 1, **dadurch gekennzeichnet, dass** das Verbindungselement eine Schnalle (5) ist und ein erstes Ende der Schnalle (5) einen Befestigungssitz (5-1) zum Verbinden mit dem zweiten Verbindungsteil (4-2) aufweist und ein zweites Ende der Schnalle (5) einen Stecker (5-2) aufweist und die Seitenwand (3) der Fahrzeugkarosserie eine Befestigungsöffnung (4-2-1) zum Verbinden mit dem Stecker (5-2) aufweist.

7. Befestigungsstruktur zum Verbinden einer festen Heckscheibe (1) eines Kraftfahrzeugs und einer dekorativen Verkleidung (2) nach Anspruch 6, **dadurch gekennzeichnet, dass** die Schnalle (5) ferner einen Dichtungsring (5-3) aufweist, der an einer Bodenfläche des Befestigungssitzes (5-1) befestigt ist, nachdem sich der Stopfen (5-2) in das Befestigungsloch (4-2-1) erstreckt, wobei der Dichtungsring (5-3) eng an die Außenfläche der Karosserieseitenverkleidung (3) angepasst ist.

8. Befestigungsstruktur zum Verbinden von feststehendem Fenster (1) und Dekorplatte (2) eines Kraftfahrzeugs nach Anspruch 1, **dadurch gekennzeichnet, dass** das erste Verbindungsteil (4-1) und das zweite Verbindungsteil (4-2) durch ein Doppelspritzgussverfahren einstückig ausgebildet sind.

9. Fahrzeug mit einer festen Heckscheibe (1) und einer Dekorplatte (2), **dadurch gekennzeichnet, dass** das Fahrzeug eine Befestigungsstruktur zum Verbinden der festen Heckscheibe (1) und der Dekorplatte (2) eines Kraftfahrzeugs nach einem der Ansprüche 1 bis 8 aufweist.

## Revendications

1. Structure de montage pour le raccordement de la fenêtre fixe arrière de l'automobile (1) et du panneau décoratif (2), qui est adaptée pour être fixée à un panneau latéral de caisse de voiture (3) par un membre de raccordement, la structure de montage comprenant
- une première pièce de raccordement (4-1); et
- une deuxième pièce de raccordement (4-2) placée sous la première pièce de raccordement (4-1) et chevauchée, au moins partiellement, avec la première pièce de raccordement (4-1),
où la première partie de raccordement (4-1) comporte une partie en angle (4-1-3), dont une extrémité est munie d'une première partie d'extension (4-1-1) qui s'étend loin du panneau latéral de la carrosserie (3) et d'une deuxième partie d'extension (4-1-2) qui s'étend de la première partie d'extension (4-1-1) au panneau latéral de la carrosserie (3), **caractérisée par le fait que** la première partie d'extension (4-1-1) et la partie en angle (4-1-3) forment une rainure de verrouillage pour engager le panneau décoratif (2);
la deuxième partie d'extension (4-1-2) est configurée pour être couplée à une lèvre d'étanchéité (1-1) de la fenêtre fixe arrière de l'automobile (1) et à une surface inférieure de la deuxième partie d'extension (4-1-2) située contre une surface externe du panneau latéral de la carrosserie de l'automobile (3); et
une extrémité de la deuxième pièce de raccordement (4-2) située à l'écart de la première pièce de raccordement (4-1) est configurée pour être reliée de façon fixe au panneau latéral de la caisse (3) par le membre de raccordement.

2. Structure de montage pour le raccordement de la fenêtre fixe arrière de l'automobile (1) et du panneau décoratif (2) conformément à la revendication 1, **caractérisée par le fait que** la rainure de verrouillage est une rainure en forme de U, dans laquelle une partie courbée du panneau décoratif (2) dépasse au moins partiellement, et la partie courbée se heurte à la première partie qui s'étend (4-1-1).

3. Structure de montage pour le raccordement de la fenêtre fixe arrière de l'automobile (1) et du panneau décoratif (2), conformément à la revendication 2, se **caractérise par le fait que** l'autre extrémité de la partie en angle (4-1-3) a une partie allongée parallèle au panneau décoratif (2), et que la deuxième partie de raccordement (4-2) a une partie de support qui chevauche la partie allongée, lorsque la partie courbée du panneau décoratif (2) dépasse dans la rainure en U, le panneau décoratif (2), la partie allongée et la partie de support sont en contact étroit l'un avec l'autre.

4. Structure de montage pour le raccordement de la fenêtre fixe arrière de l'automobile (1) et du panneau décoratif (2) conformément à la revendication 1, **caractérisée par le fait qu'**au moins un trou borgne est fourni sur une surface inférieure de la deuxième partie (4-1-2) qui s'étend sur le côté en direction du panneau latéral de la caisse (3).

5. Structure de montage pour relier la fenêtre fixe arrière de l'automobile (1) et le panneau décoratif (2), conformément à la revendication 4, se **caractérise par** la présence de multiples trous aveugles et les multiples trous aveugles sont disposés à intervalles linéaires ou à intervalles circonférentiels.

6. Structure de montage pour le raccordement de la fenêtre fixe arrière de l'automobile (1) et du panneau décoratif (2) selon la revendication 1, **caractérisée par le fait que** l'élément de raccordement est une boucle (5), et qu'une première extrémité de la boucle (5) est munie d'un siège de montage (5-1) pour le raccordement à la deuxième partie de raccordement (4-2), et qu'une deuxième extrémité de la boucle (5) est munie d'une fiche (5-2), et que le panneau latéral de la caisse (3) est muni d'un trou de montage (4-2-1) pour le raccordement à la fiche (5-2).

7. Structure de montage pour le raccordement de la fenêtre fixe arrière de l'automobile (1) et du panneau décoratif (2) selon la revendication 6, **caractérisée par le fait que** la boucle (5) comprend en outre un anneau d'étanchéité (5-3) fixé à une surface inférieure du siège de montage (5-1), après que la fiche (5-2) se soit étendue dans le trou de montage (4-2-1), l'anneau d'étanchéité (5-3) s'adapte étroitement à la surface externe du panneau latéral de la carrosserie (3).

8. Structure de montage pour le raccordement de la fenêtre fixe arrière (1) et du panneau décoratif (2) de l'automobile, conformément à la revendication 1, se **caractérise par le fait que** la première pièce de raccordement (4-1) et la deuxième pièce de raccordement (4-2) sont entièrement constituées par une méthode de moulage par double injection.

9. Véhicule comportant une fenêtre fixe arrière (1) et un panneau décoratif (2), **caractérisé en ce que** le véhicule comprend une structure de montage pour relier la fenêtre fixe arrière (1) et le panneau décoratif (2) de l'automobile, conformément à l'une des revendications 1 à 8.
